# EUROPEAN PATENT APPLICATION

(11) **EP 3 276 592 A1**
(43) Date of publication of application: **31.01.2018**
(21) Application number: 16768942.1
(22) Date of filing: 25.03.2016
(51) Int. Cl.: G09B 9/00, B33Y 80/00, G09B 23/28

(54) **TRAINING DEVICE FOR ENDOSCOPIC ENDONASAL SKULL BASE SURGERY**

(30) Priority: 25.03.2015 JP 2015062523
(71) Applicant: Ono & Co., Ltd., Tokyo 158-0083 (JP)
(72) Inventor: ONO, Hidenori, Tokyo 158-0083 (JP); MUTO, Jun, Chiba-shi Chiba 263-0016 (JP)
(74) Representative: Müller-Boré & Partner Patentanwälte PartG mbB
(86) International application number: PCT/JP2016/059622
(87) International publication number: WO 2016/153039

(57) **Abstract**

An apparatus for conducting a training in endoscopic endonasal skull base surgery is provided.

A training apparatus 2 for endoscopic endonasal skull base surgery is composed of a human head model 4 and a liquid circulation means 6. The human head model 4 comprises an anterior portion 8 including a nose part 16 in which nostrils 16a are formed, and a main portion 40 including at least part of a nasal septum 44, at least part of a nasal cavity lateral wall 42, at least part of a sphenoidal sinus posterior wall 66, and at least part of an internal carotid artery 72. The liquid circulation means 6 comprises a storage tank 102 for storing a nontransparent colored liquid, a supply flow path 104 disposed between the storage tank 102 and the at least part of the internal carotid artery 72, a return flow path 106 disposed between the at least part of the internal carotid artery 72 and the storage tank 102, and a circulation pump 108 for circulating the liquid within the storage tank 102 through the supply flow path 104, the at least part of the internal carotid artery 72, and the return flow path 106.

## Description

### Technical Field

This invention relates to a training apparatus for endoscopic endonasal surgery of a skull base lesion.

### Background Art

In the sphenoid bone situated at nearly the center of the skull base of a human, a depression called Turkish saddle is present nearly at its center. The pituitary gland, which is an endocrine organ secreting hormones, is accommodated in this depression. A tumor occurring in the pituitary gland has hitherto undergone transsphenoidal sinus surgery which involves incising an upper gingival part (upper dental root) behind the upper lip, and approaching the tumor from the incision under a microscope. In accordance with improvements in surgical instruments, including miniaturization of endoscopes, however, endoscopic endonasal surgery, which provides a wide field of view, enables the site of surgery to be confirmed clearly, and is also minimally invasive, as compared with the transsphenoidal sinus surgery performed under a microscope, has come to be performed on hypophyseal tumor. Moreover, diseases indicated for endoscopic endonasal surgery have expanded, in addition to hypophyseal tumor, to skull base lesions, such as meningioma and chordoma, for which craniotomy involving the opening of the skull to approach the lesion. Thus, the importance of endoscopic endonasal surgery has further increased.

Endoscopic endonasal surgery is an operation in which a surgical instrument such as an endoscope or a surgical knife is inserted into the nasal cavity, a hollow space inside the nostrils, or into the paranasal sinuses, hollow spaces present in the bones adjacent to the nasal cavity, through the nostrils to approach lesions via the nasal cavity or the paranasal sinuses . Originally, this surgery has been performed by otolaryngologists to deal with lesions in the nasal cavity or lesions in the paranasal sinuses. Endoscopic endonasal surgery on a skull base lesion (will hereinafter be referred to as "endoscopic endonasal skull base surgery"), therefore, is usually performed by collaboration between an otolaryngologist who understands the structure of the nasal cavity and the structure of the paranasal sinuses and is skilled in endoscopic endonasal surgery of lesions in the nasal cavity and lesions in the paranasal sinuses, and a brain surgeon who understands intracranial structures and is skilled in surgery of lesions in the skull base. Among the paranasal sinuses are the frontal sinus in the frontal bone, the ethmoidal sinuses in the ethmoid bone, the maxillary sinus in the maxilla, and the sphenoidal sinus in the sphenoid bone.

In the initial stage of endoscopic endonasal skull base surgery, namely, the stage of approaching the nasal cavity and the paranasal sinuses, the otolaryngologist manipulates a surgical instrument. Then, in the stage of approach to the bones in the skull base or the cranial dura mater, the otolaryngologist manipulates an endoscope, while the brain surgeon manipulates other surgical instruments, to perform resection of tissue such as the bone, incision of the cranial dura mater, or excision of a tumor, for example. After tumor excision, the brain surgeon and the otolaryngologist collaboratively close the cranial dura mater. Then, the otolaryngologist treats the paranasal sinuses and the nasal cavity to complete the surgery.

In the endoscopic endonasal skull base surgery, it is necessary to resect tissue, such as the nasal cavity lateral wall covering the circumference of the nasal cavity, or the nasal septum dividing the nasal cavity into right and left halves, by means of a cutting tool in order to secure a path from the nasal cavity to the lesion. During tissue resection, moreover, the internal carotid artery situated behind the nasal cavity lateral wall may have to be exposed to the surgical space, depending on the location, size, etc. of the lesion. The internal carotid artery is a pair of (right and left) blood vessels passing on both sides of the pituitary gland and playing a very important role in the head and the neck. If the internal carotid artery is damaged, for example, during incision of the cranial dura mater, or tumor excision as well as tissue resection, a large amount of blood gushes out of this artery, and may thus lead to fatal results. In this case, therefore, an urgent measure needs to be taken, but a spurt of blood released from the internal carotid artery stains the lens of the endoscope. As a result, the operator's vision is obstructed, making it difficult to confirm the surgical space by endoscopy. Besides, the surgical space in endoscopic endonasal skull base surgery is a narrow space, such as that of the nasal cavity or the paranasal sinuses, and bleeding from the internal carotid artery is massive . Thus, a hemostatic operation, which is performed with the endoscope lens being cleaned by a cleaning tool inserted into the surgical space together with the endoscope, is an extremely difficult operation to the brain surgeon or to the otolaryngologist.

An operator who performs endoscopic endonasal skull base surgery is, therefore, desired to have a training in surgery, particularly, a training in dealing with damage to the internal carotid artery. This training may be conducted using a corpse' s head. However, the use of the corpse's head is under great restrictions from the ethical or other point of view. Even if the corpse' s head could be used, moreover, there is no bloodstream because of the corpse. This poses difficulty with a training in dealing with damage to the internal carotid artery. No documents have been found out on devices for conducting a training in endoscopic endonasal skull base surgery.

### Summary of the Invention

### Problems to be solved by the invention

The present invention has been accomplished in the light of the above facts. It is a main technical task of the invention to provide an apparatus for conducting a training in endoscopic endonasal skull base surgery, in particular, a training in dealing with damage to the internal carotid artery.

### Means for solving the problems

According to the present invention, there is provided, as a training apparatus for endoscopic endonasal skull base surgery which aims at achieving the above technical task, a training apparatus for endoscopic endonasal skull base surgery, composed of a human head model and a liquid circulation means, wherein the human head model comprises an anterior portion including a nose part in which nostrils are formed, and a main portion including at least part of a nasal septum, at least part of a nasal cavity lateral wall, at least part of a sphenoidal sinus posterior wall, and at least part of an internal carotid artery; and the liquid circulation means comprises a storage tank for storing a nontransparent colored liquid, a supply flow path disposed between the storage tank and the at least part of the internal carotid artery, a return flow path disposed between the at least part of the internal carotid artery and the storage tank, and a circulation pump for circulating the liquid within the storage tank through the supply flow path, the at least part of the internal carotid artery, and the return flow path.

Preferably, the human head model is provided with a posterior portion including a nasal bone, and the main portion is formed separately from the anterior portion and the posterior portion, and is mounted detachably on the posterior portion. It is advantageous that the anterior portion be formed separately from the posterior portion and the main portion, and be mounted detachably on the posterior portion mounted with the main portion. It is preferred for the human head model to be provided with a base block for detachably accommodating the posterior portion mounted with the main portion. The main portion is preferably formed based on three-dimensional image data generated from tomographic information on the human head. The main portion is advantageous formed from a powder sintering material. The anterior portion is preferably formed from an elastomer.

### Effects of the invention

With the training apparatus for endoscopic endonasal skull base surgery which is provided by the present invention, when the nasal septum, the nasal cavity lateral wall, and the sphenoidal sinus posterior wall are cut by a cutting tool inserted from the nostrils into the nasal cavity, the internal carotid artery is exposed to the interior of the nasal cavity. If the internal carotid artery is further damaged by the cutting tool, a nontransparent colored liquid gushes out. Thus, a training for how to deal with the damaged internal carotid artery can be performed.

### Brief Description of the Drawings

[Fig. 1] is a liquid pressure circuit diagram showing a training apparatus for endoscopic endonasal skull base surgery configured in accordance with the present invention.
[Fig. 2] is a perspective view of a human head model.
[Fig. 3] is a front view of the human head model from which an anterior portion and a wedge have been removed.
[Fig. 4] is a front view of the anterior portion.
[Fig. 5] is a left side view of the anterior portion.
[Fig. 6] is a front view of a posterior portion.
[Fig. 7] is a plan view of the posterior portion.
[Fig. 8] is a left side view of the posterior portion.
[Fig. 9] is a sectional view taken along the direction of arrowed line A-A in Fig. 6.
[Fig. 10] is a sectional view taken along the direction of arrowed line B B in Fig. 6.
[Fig. 11] is a front view of a main portion.
[Fig. 12] is a rear view of the main portion.
[Fig. 13] is a plan view of the main portion.
[Fig. 14] is a left side view of the main portion.
[Fig. 15] is a perspective view of a base block body.
[Fig. 16] is a left side view of the base block body.
[Fig. 17] is a perspective view of an inner upper frame.
[Fig. 18] is a perspective view of an inner lower frame.
[Fig. 19] is a perspective view of the wedge.

### Mode for Carrying Out the Invention

A preferred embodiment of the training apparatus for endoscopic endonasal skull base surgery configured in accordance with the present invention will now be described in detail by reference to the accompanying drawings.

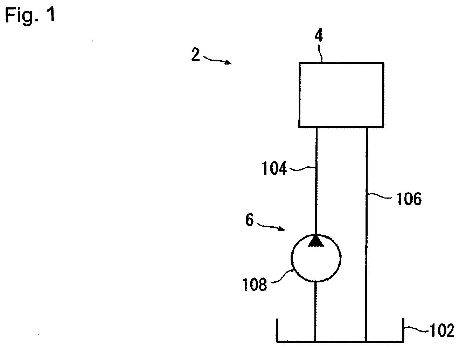

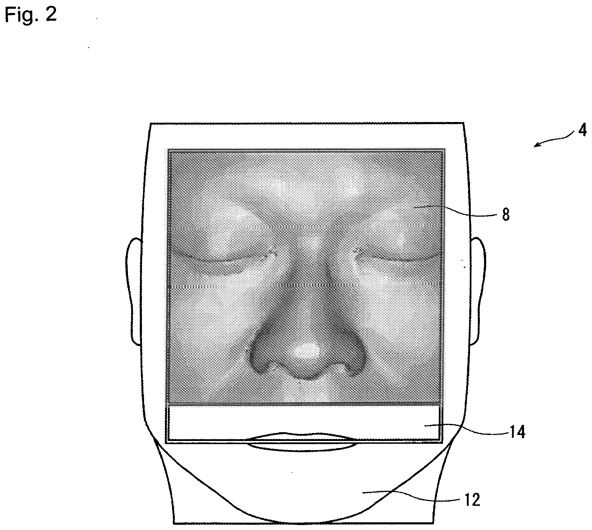

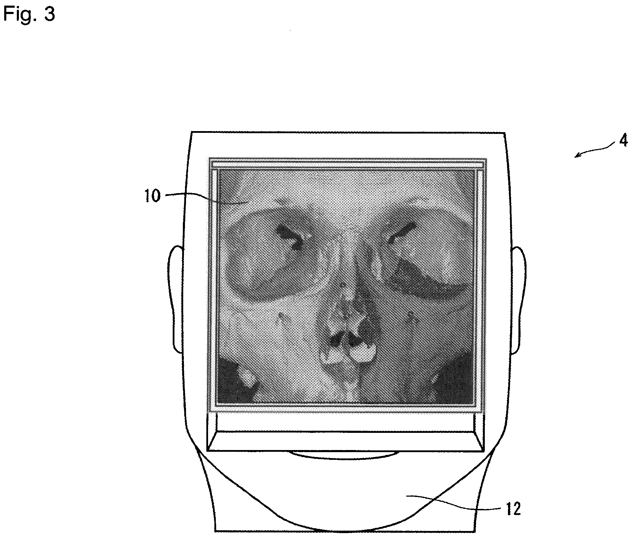

As shown in Fig. 1, a training apparatus for endoscopic endonasal skull base surgery, indicated entirely at the numeral 2, is composed of a human head model 4, and a liquid circulation means 6. In the illustrated embodiment, the human head model 4 comprises an anterior portion 8, a posterior portion 10, a base block 12, and a wedge 14, as shown in Figs. 2 and 3.

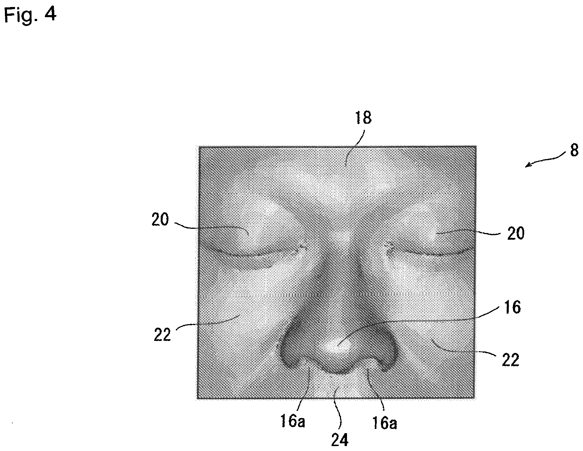

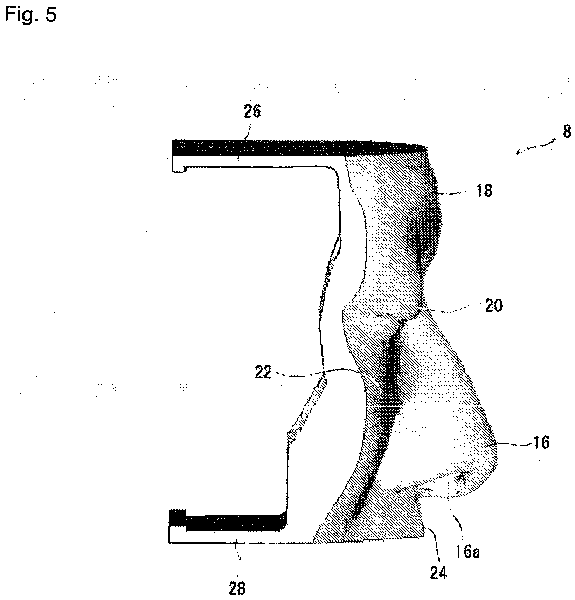

Figs. 4 and 5 will be referred to for illustration. The anterior portion 8, which reproduces at least part of a human face, is disposed on the front surface of the human head model 4 and, importantly, includes a nose part 16 formed with nostrils 16a. In the illustrated embodiment, the anterior portion 8, which is formed in a quadrilateral shape, when viewed from the front, separately from the posterior portion 10 and a main portion 40 to be described later, includes the nose part 16 located centrally in a crosswise direction and on a lower side in a vertical direction when viewed from the front; a forehead part 18 located above the nose part 16 and extending in the lateral direction; right and left orbit parts 20 located below both ends in the lateral direction of the forehead part 18; right and left suborbital parts 22 located below the orbit parts 20; an upper jaw part 24 located below the nose part 16; a rectangular upper piece 26 extending rearward from the upper end of the forehead part 18; and a rectangular lower piece 28 extending rearward from the lower end of the upper jaw part 24. A front surface of the nose part 18 protrudes forward, and the right and left nostrils 16a penetrating the anterior portion 8 are formed in a lower region of the nose part 16. A rear surface of the anterior portion 8 is formed in correspondence with the front surface shape of the posterior portion 10. For example, a rear surface of the nose part 16 is concave forward, while a rear surface of each orbit part 20 protrudes rearward. When the anterior portion 8 is mounted on the posterior portion 10, a nasal bone 46, an anterosuperior side of a maxilla 50, and an anterior side of a nasal septal cartilage 68 of the posterior portion to be described later are accommodated in the rear surface of the nasal part 16, and the rear surface of each orbit part 20 is accommodated in an orbit 32 of the posterior portion 10 to be described later. The anterior portion 8 is preferably formed based on three-dimensional image data, which are generated from tomographic information on the human head, by injection molding using an elastomer having flexibility and elasticity closely analogous to those of the human skin.

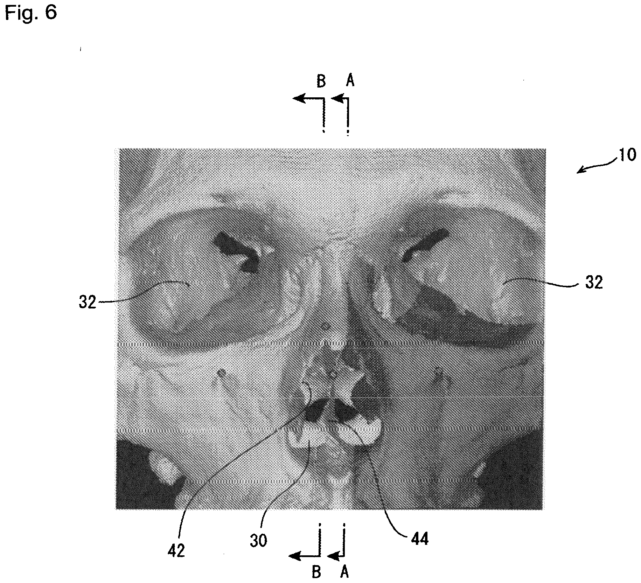

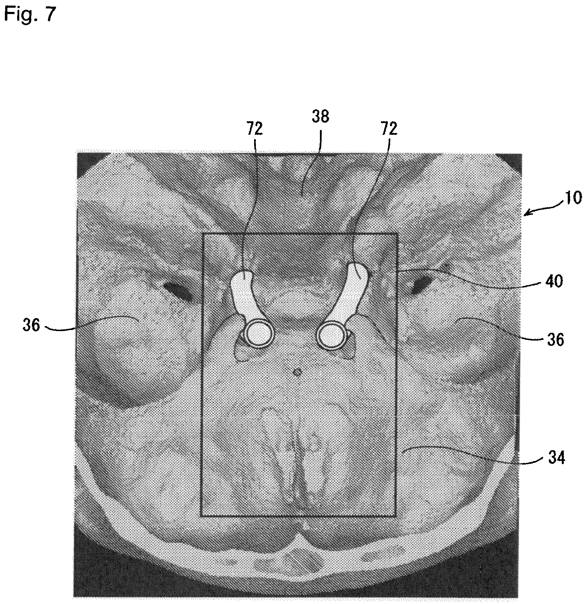

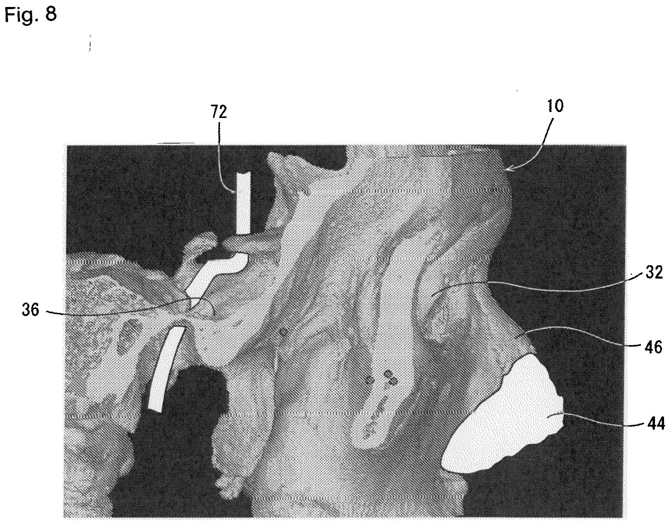

Figs. 6 to 10 will be further referred to for illustration. The posterior portion 10, a reproduction of at least part of the human cranial bones, is disposed behind the anterior portion 8. In the illustrated embodiment, the posterior portion 10 is formed in a quadrilateral shape when viewed from the front as shown in Fig. 6, and has an upper surface, a lower surface, and both side surfaces (right and left side surfaces) which can make surface contact with flat surfaces. Its rear surface can also be brought into surface contact with a flat surface, as shown in Figs. 7 and 8. The posterior portion 10 is formed with a nasal cavity 30 located centrally in the lateral direction and on a lower side in the vertical direction when viewed from the front, and the right and left orbits 32 located above the nasal cavity 30 and concave rearward. As shown in Fig. 7, the posterior portion 10 is also formed with a fan-shaped forehead skull base 34 located on the anterior side, a butterfly-shaped middle cranial fossa 36 located behind the forehead skull base 34, and a trapezoidal posterior cranial fossa 38 located behind the middle cranial fossa 36, in a plan view. Preferably, the main portion 40 formed separately from the posterior portion 10 is detachably mounted on the posterior portion 10. In the present embodiment, the main portion 40 is located nearly centrally in the lateral direction in the plan view, as shown in Fig. 7.

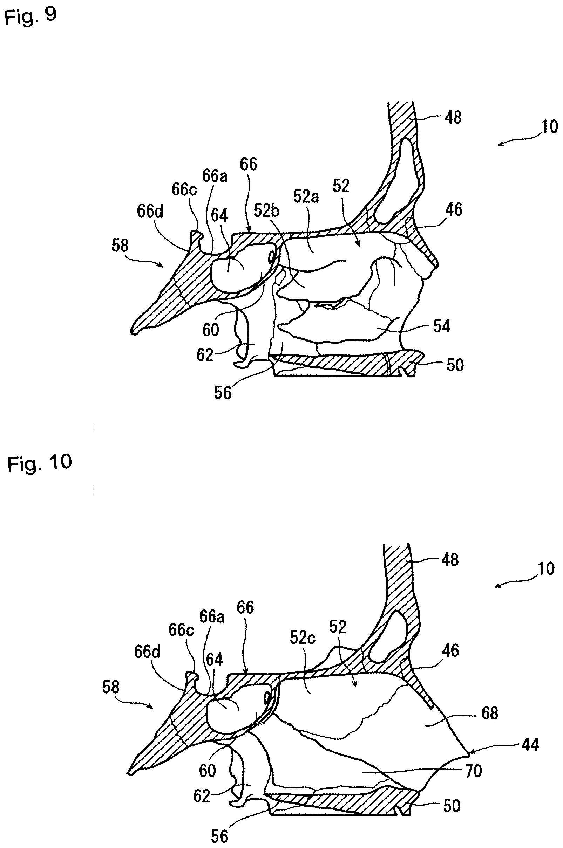

The nasal cavity 30 is located behind the nostrils 16a upon mounting of the anterior portion 8 on the front surface of the posterior portion 10, extends rearward from the nostrils 16a, and is formed as a hollow space inside the nostrils 16a. The nasal cavity 30 has a circumference covered with a nasal cavity lateral wall 42, and is divided into two chambers, right and left chambers, by a nasal septum 44. The nasal cavity lateral wall 42, as shown in Fig. 9, is composed of the nasal bone 46 located between the orbits 32; a frontal bone 48 located above the nasal bone 46; the maxilla 50 located behind the nasal bone 46; a superior nasal concha 52a and a middle nasal concha 52b of an ethmoid bone 52 located behind the maxilla 50; an inferior nasal concha 54 located below the middle nasal concha 52b; a palatine bone 56 located behind the middle nasal concha 52b and the inferior nasal concha 54; and a sphenoidal sinus anterior wall 60 and pterygoid processes 62 of a sphenoid bone 58 located behind the palatine bone 56. The sphenoidal sinus anterior wall 60 is a part of the sphenoid bone 58 covering the front side of a sphenoidal sinus 64 located behind the nasal cavity 30. The sphenoidal sinus 64 is one of the paranasal sinuses, and is a hollow space present in the sphenoid bone 58. On the other hand, the nasal septum 44, as shown in Fig. 10, is composed of the nasal septal cartilage 68 located at the front end, a perpendicular plate 52c of the ethmoid bone 52 located posterosuperiorly to the nasal septal cartilage 68, and a vomer bone 70 located posteroinferiorly to the nasal septal cartilage 68.

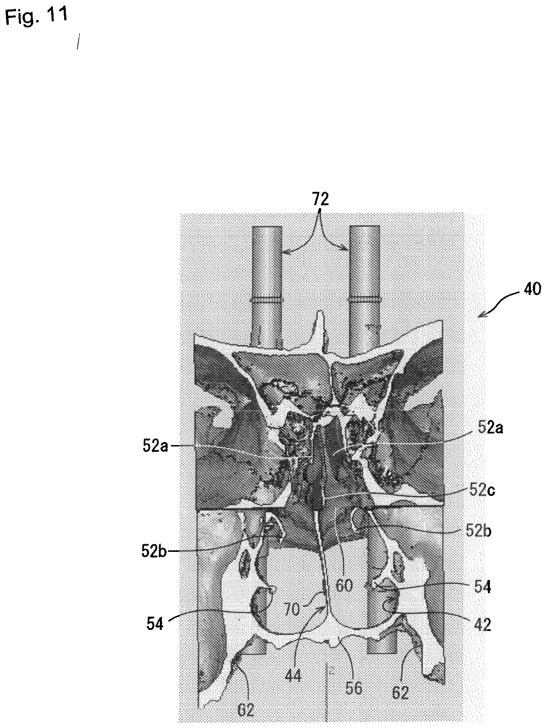

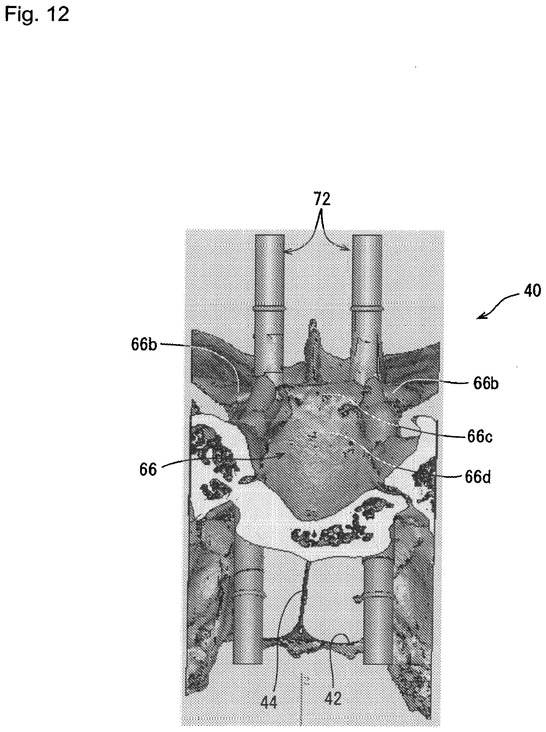

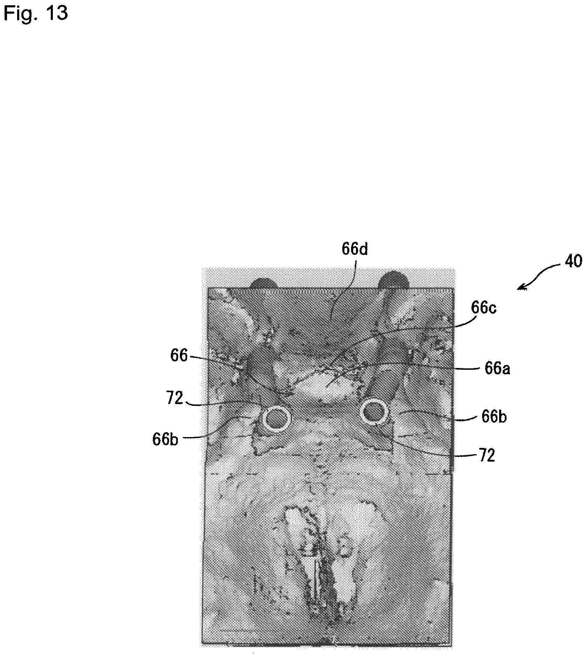

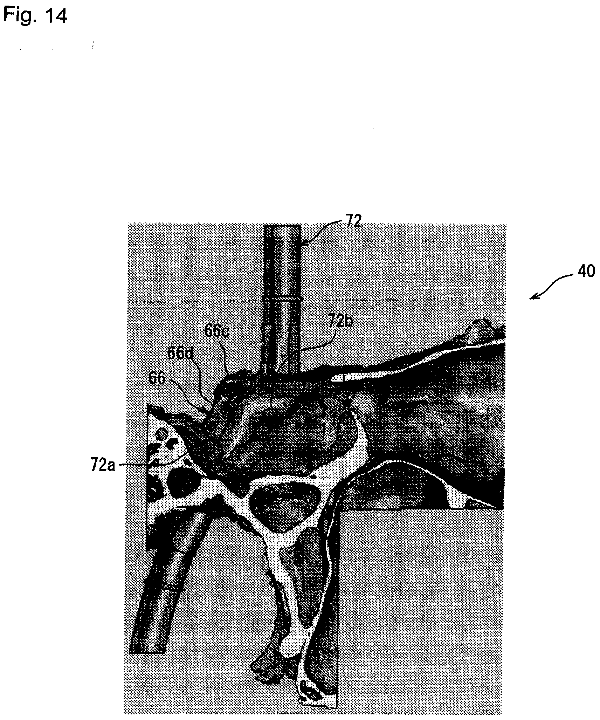

Figs. 11 to 14 will be referred to for illustration. It is important for the main portion 40 to include at least part of the nasal cavity lateral wall 42, at least part of the nasal septum 44, at least part of the sphenoidal sinus posterior wall 66 covering the rear side of the sphenoidal sinus 64, and at least part of an internal carotid artery 72. In the illustrated embodiment, the main portion 40 includes the posterior side of the nasal cavity lateral wall 42, in detail, the posterior side of the superior nasal concha 52a, the posterior side of the middle nasal concha 52b, the posterior side of the inferior nasal concha 54, the posterior side of the palatine bone 56, the sphenoidal sinus anterior wall 60, and the pterygoid processes 62, as shown in Fig. 11. In the present embodiment, moreover, the main portion 40 includes the posterior side of the nasal septum 44, in detail, the posterior side of the perpendicular plate 52c of the ethmoid bone 52 and the posterior side of the vomer bone 70. The sphenoidal sinus posterior wall 66 of the main portion 40 is advantageously formed with a Turkish saddle 66a located centrally in the middle cranial fossa 36 and depressed downward, a pair of (right and left) anterior clinoid processes 66b located on both sides (right and left sides) of the Turkish saddle 66a and protruding rearward from the rear end of the forehead skull base 34, a posterior clinoid process 66c protruding upward from the rear end of the Turkish saddle 66a, and a clivus 66d extending downward inclinedly toward the rear from the inferior side of the posterior clinoid process 66c, as shown in Figs. 12 to 14. (For the Turkish saddle 66a, posterior clinoid process 66c, and clivus 66d, reference is requested to Figs. 9 and 10 showing their numerals.) The internal carotid artery 72 of the main portion 40 preferably includes a paraclivus part 72a located laterally outwardly of the clivus 66d and extending upward from below; or a cavernous sinus part 72b extending forward from the upper end of the paraclivus part 72a, passing laterally inwardly of the anterior clinoid processes 66b, and then extending upwardly. In the illustrated embodiment, the paired (right and left) internal carotid arteries 72 are formed, and each include both of the paraclivus part 72a and the cavernous sinus part 72b. However, there may be one of the right and left internal carotid arteries 72, or each of them may include either the paraclivus part 72a or the cavernous sinus part 72b. Furthermore, the internal carotid artery 72 is formed to be hollow. The posterior portion 10 and the main portion 40 may include all of the above-mentioned tissues, or may include tissues other than the tissues mentioned above. The inner and outer surfaces of the nasal cavity lateral wall 42, and the surface of the nasal septum 44 may be covered with an elastic membrane mimicking the human mucosa. This elastic membrane can be formed from a suitable rubber material such as silicone rubber.

The posterior portion 10 and the main portion 40 are preferably formed from a powder sintering material by selective laser sintering based on three-dimensional image data generated from tomographic information on the human head. Since the selective laser sintering per se is a publicly known shaping method, its detailed explanation will be omitted herein. Examples of the powder sintering material for forming the posterior portion 10 and the main portion 40 include powders of relatively rigid synthetic resins such as polyamide (nylon), polycarbonate, polyester, polyacetal, polyethylene, polypropylene, polyvinyl chloride, polystyrene, polybutylene, ABS resin, cellulosic resin, acrylic resin, epoxy resin, and fluororesin. From the viewpoints of shapability, strength and hardness by selective laser sintering, polyamide, in particular, polyamide 11, is preferred. The posterior portion 10 and the main portion 40 include the nasal septal cartilage 68 and the internal carotid artery 72 which are tissues other than the bones . As will be described later, however, a bone part such as the sphenoid bone 58 is mainly cut during training. Hence, the powder sintering material for forming the posterior portion 10 and the main portion 40 preferably has cuttability similar to that of the human bone, and is thus composed, preferably, of a synthetic resin powder and an inorganic filler powder. Examples of the inorganic filler include talc, calcium carbonate, glass beads, silica, clay, kaolin, barium sulfate, wollastonite, mica, titanium oxide, diatomaceous earth, hydroxyapatite, and metal powder. In particular, glass beads are advantageous, because their cuttability is more similar to that of the human bone. The proportions of the synthetic resin powder and the inorganic filler are preferably 30 to 90% by weight of the synthetic resin powder and 10 to 70% by weight of the inorganic filler, particularly preferably 50 to 80% by weight of the synthetic resin powder and 20 to 50% by weight of the inorganic filler, from the point of view of cuttability similar to the human bone. The nasal septal cartilage 68 and the internal carotid artery 72 may be formed from a rubber material or a resin material, for example, silicone rubber or polyvinyl alcohol, separately from the posterior portion 10 and the main portion 40. The internal carotid artery 72 may have a tubular blood vessel member inserted into the interior of a tubular part, which has been formed as a hollow space from a powder sintering material together with the main portion 40, the blood vessel member being formed from a rubber material or a resin material, for example, silicone rubber or polyvinyl alcohol, separately from the main portion 40.

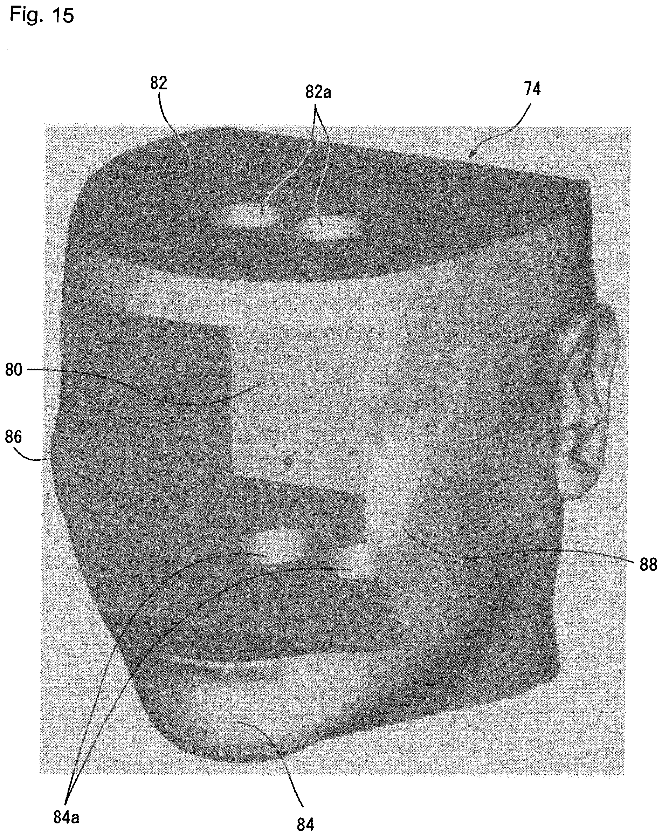

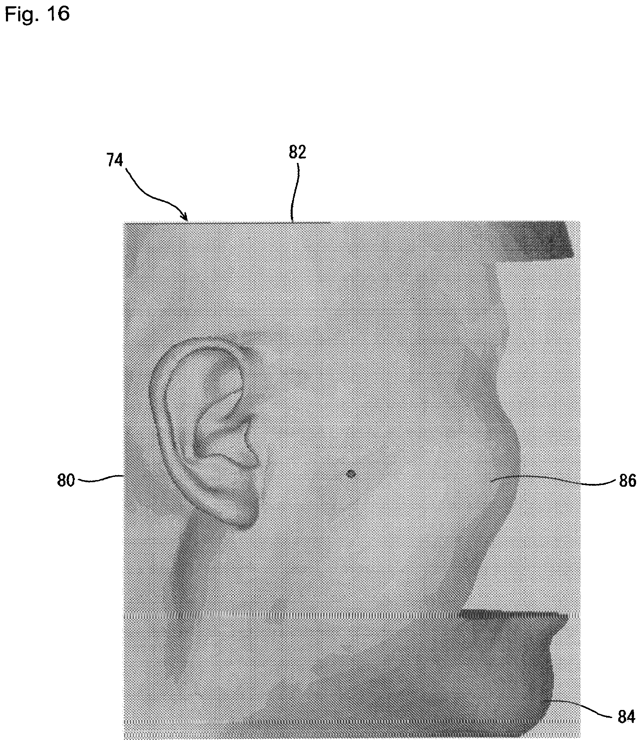

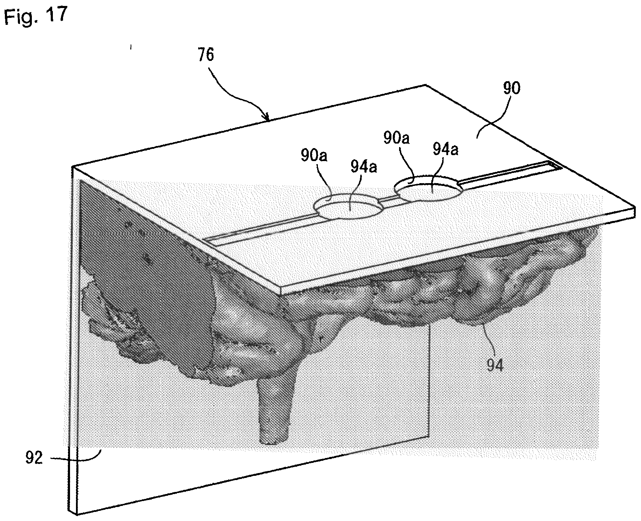

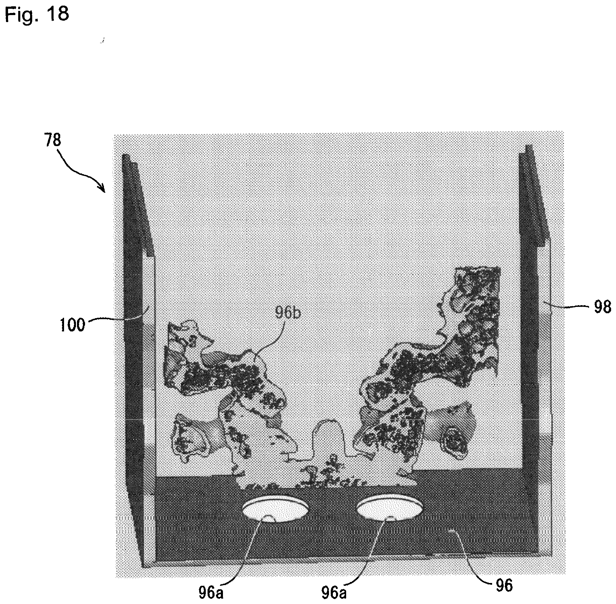

Figs. 15 to 18 will be referred to for illustration. In the illustrated embodiment, the base block 12 is composed of a base block body 74 (see Figs. 15 and 16) accommodating the anterior portion 8 and the posterior portion 10 mounted with the main portion 40, and an inner upper frame 76 (see Fig. 17) and an inner lower frame 78 (see Fig. 18) to be accommodated within the base block body 74 together with the anterior portion 8, the posterior portion 10 and the main portion 40. The base block body 74, as shown in Figs. 15 and 16, is composed of a rear surface wall 80 formed to be flat on both of inner and outer surfaces, an upper surface wall 82 extending forward from the upper end of the rear surface wall 80, a lower surface wall 84 extending forward from the lower end of the rear surface wall 80, a right side surface wall 86 extending forward from the right end of the rear surface wall 80, and a left side surface wall 88 extending forward from the left end of the rear surface wall 80, and a square accommodation recess is defined by the inner surface of each of the walls. In the upper surface wall 82 and the lower surface wall 84, paired penetrating openings 82a, 82a and 84a, 84a, respectively, are formed with a spacing in the width direction. The inner surfaces of the upper surface wall 82, the right side surface wall 86, and the left side surface wall 88 are formed to be nearly perpendicular to the inner surface of the rear surface wall 80. On the other hand, the inner surface of the lower surface wall 84 is formed to be inclined upwardly from the front end toward the rear end. The outer surfaces of the upper surface wall 82 and the lower surface wall 84 are formed to be flat. It is preferred that the base block body 74 be formed from a powder sintering material by selective laser sintering, similarly to the posterior portion 10 and the main portion 40.

The inner upper frame 76 is provided with a rectangular upper surface plate 90, a rectangular rear surface plate 92 extending downward from the rear end of the upper surface plate 90, and a brain 94 bonded to the inner surfaces of the upper surface plate 90 and the rear surface plate 92, as shown in Fig. 17. In the upper surface plate 90, paired penetrating openings 90a are formed with a spacing in the width direction. In the brain 94, paired penetrating openings 94a are formed to be continuous with the penetrating openings 90a of the upper surface plate. The width dimensions of the upper surface plate 90 and the rear surface plate 92 correspond to the width dimension of the accommodation recess of the base block body 74. The upper surface and rear surface of the brain 94 are formed to be flat in correspondence with the inner surfaces of the upper surface plate 90 and the rear surface plate 92. The width dimension of the brain 94 corresponds to the width dimensions of the upper surface plate 90 and the rear surface plate 92, and the right side surface and left side surface of the brain 94 are formed to be flat. The inner lower frame 78 is provided with a rectangular lower surface plate 96, a rectangular right side surface plate 98 extending upward from the right end of the lower surface plate 96, and a rectangular left side surface plate 100 extending upward from the left end of the lower surface plate 96, as shown in Fig. 18. In the lower surface plate 96, paired penetrating openings 96a are formed with a spacing in the width direction. A bone part 96b formed in a shape capable of surface contact with the rear surface of the posterior portion 10 is erected on the upper surface of the lower surface plate 96. The upper surface plate 90 and rear surface plate 92 of the inner upper frame 76, and the inner lower frame 78 are preferably formed from a powder sintering material by selective laser sintering, as are the posterior portion 10 and the main portion 40. The brain 94 of the inner upper frame 76 is preferably formed from an elastomer, as is the anterior portion 8.

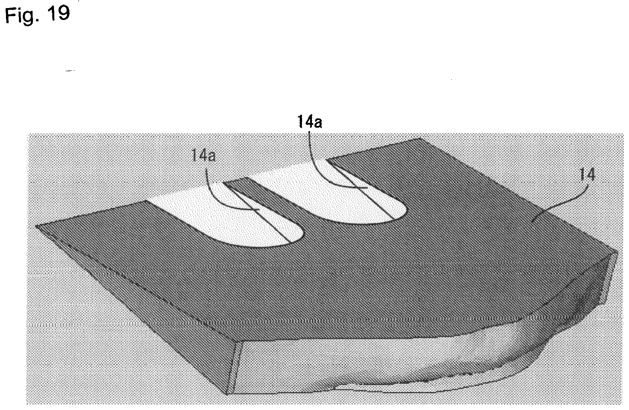

The wedge 14 is intended to fix the anterior portion 8 and the posterior portion 10, on which the main portion 40 has been mounted, within the base block 12 and, as shown in Fig. 19, the wedge 14 is formed, with its thickness gradually decreasing from the front end to the rear end. At the rear end, paired U-shaped notches 14a are formed with a spacing in the width direction. In the present embodiment, when the human head model 4 is assembled, the inner upper frame 76 and the inner lower frame 78 are first accommodated within the accommodation recess of the base block body 74, together with the posterior portion 10 on which the main portion 40 has been mounted. Then, the anterior portion 8 is mounted on the front surface of the posterior portion 10. On this occasion, the upper piece 26 of the anterior portion 8 is positioned between the upper surface wall 82 of the base block body 74 and the upper surface plate 90 of the inner upper frame 76 . The lower piece 28 of the anterior portion 8 is positioned between the lower surface wall 84 of the base block body 74 and the lower surface plate 96 of the inner lower frame 78. The wedge 14 is inserted between the lower piece 28 and the lower surface wall 84 of the base block body 74, whereby the anterior portion 8, the posterior portion 10, and the main portion 40 are fixed inside the base block 12 (see Fig. 2) . The wedge 14 is advantageously formed from a powder sintering material by selective laser sintering, as are the posterior portion 10 and the main portion 40.

The liquid circulation means 6 comprises a storage tank 102, a supply flow path 104, a return flow path 106, and a circulation pump 108, as shown in Fig. 1. The storage tank 102 stores a non transparent colored liquid, for example, ablood-like red liquid. The supply flow path 104 is disposed between the storage tank 102 and the lower end of the paraclivus part 72a of the internal carotid artery 72, and is inserted through the penetrating openings 84a of the lower surface wall 84 of the base block body 74 and the penetrating openings 96a of the lower surface plate 96 of the inner lower frame 78. The return flow path 106 is disposed between the upper end of the cavernous sinus part 72b of the internal carotid artery 72 and the storage tank 102, and is inserted through the penetrating openings 94a of the brain 94, the penetrating openings 90a of the upper surface plate 90 of the inner upper frame 76, and the penetrating openings 82a of the upper surface wall 82 of the base block body 74. The liquid within the storage tank 102 is circulated through the supply flow path 104, the internal carotid artery 72, and the return flow path 106 by the circulation pump 108.

An explanation will be offered for procedures for performing a training in dealing with damage to the internal carotid artery 72 by use of the above-described training apparatus 2 for endoscopic endonasal skull base surgery. The first of the procedures is to insert an endoscope, and surgical instruments, such as a cutting tool, a suction tool, a cleaning tool, and a surgical knife (none of them are shown), into the nasal cavity 30, which is a surgical space, from the nostrils 16a of the nose part 16. The second procedure is to cut, mainly, the posterior side of the vomer bone 70 and the sphenoidal sinus anterior wall 60 of the main portion 40 by means of the cutting tool, thereby expanding the surgical space for approach to the sphenoidal sinus posterior wall 66. The third procedure is to cut, mainly, the sphenoidal sinus posterior wall 66 of the main portion 40 by means of the cutting tool, thereby exposing the paraclivus part 72a or/and the cavernous sinus part 72b of the internal carotid artery 72 to the surgical space. The second and third procedures include sucking resulting swarf, as appropriate, by the suction tool and, if the swarf deposits on the endoscope lens, ejecting a cleaning solution from the cleaning tool toward the endoscope lens, thereby cleaning the endoscope lens. The fourth procedure is to damage the paraclivus part 72a or/and the cavernous sinus part 72b by means of the cutting tool, thereby letting the liquid spurt from the paraclivus part 72a or/and the cavernous sinus part 72b. The fifth procedure is to ensure a visual field while cleaning the endoscope lens by use of the cleaning tool, adjust and control the spurt of the liquid from the paraclivus part 72a or/and the cavernous sinus part 72b, and further stop the liquid spurt.

In the above-described training apparatus 2 for endoscopic endonasal skull base surgery, when the posterior side of the vomer bone 70, the sphenoidal sinus anterior wall 60, and the sphenoidal sinus posterior wall 66 of the main portion 40 are cut by the cutting tool inserted into the nasal cavity 30 from the nostrils 16a, the paraclivus part 72a or/and the cavernous sinus part 72b of the internal carotid artery 72 is exposed inside the nasal cavity 30. If the paraclivus part 72a or/and the cavernous sinus part 72b is further damaged by the cutting tool, the nontransparent colored liquid gushes out. Thus, the training in dealing with the damage to the paraclivus part 72a or/and the cavernous sinus part 72b can be conducted.

In endoscopic endonasal skull base surgery, if a portion of the paraclivus part, for example, of the internal carotid artery is exposed in the surgical space and damaged to cause hemorrhage, an operator performs an operation to excise a tissue, such as bone, which covers the surroundings of the above portion in the paraclivus part (i.e., damaged site), thereby exposing the surroundings of the portion in the paraclivus part to the surgical space, and then suppress hemorrhage. This operation is a difficult operation, because it is performed, with the field of vision being secured by cleaning the endoscope lens, which is stained due to a voluminous spurt of blood, by means of the cleaning tool. Also, it is an operation requiring rapidity, since it must be performed in a limited time until the amount of bleeding reaches a lethal amount. As the first step of the training for response using the training apparatus 2, therefore, a response drill can be performed for dealing with damage to the paraclivus part 72a if most of the paraclivus part 72a, for example, of the internal carotid artery is exposed to the surgical space. This drill omits an operation to expose the surroundings of the damaged site in the paraclivus part 72a to the surgical space during liquid spurting, and mainly involves suppressing bleeding while ensuring the visual field by cleaning the endoscope lens by the cleaning tool during liquid spurting. After mastery of the first-step drill, as the second step of the training for response using the training apparatus 2, a response drill can be performed for dealing with damage to the paraclivus part 72a if only a portion of the paraclivus part 72a, for example, of the internal carotid artery is exposed to the surgical space. This drill mainly involves suppressing hemorrhage after cutting the sphenoidal sinus posterior wall 66, etc. by means of the cutting tool while cleaning the endoscope lens by the cleaning tool during liquid spurting, and exposing the surroundings of the portion in the paraclivus part 72a (the damaged site) to the surgical space.

In the field of otolaryngology, endoscopic surgery of lesions in the nasal cavity and lesions in the paranasal sinuses is performed mostly by the operator alone, and education in surgical techniques is often conducted in the actual surgery. In the actual surgery, images photographed by the endoscope are displayed on the screen, but the photographed images are planar . It is difficult, therefore, for an educatee to correctly understand the complicated three-dimensional structures of the nasal cavity and the paranasal sinuses from the photographed images. To the educatee, understanding of the bone structure is also difficult, because the surface of the bone is covered with the mucosa. In this connection, the nasal cavity 30 and the sphenoidal sinus 64 are formed in the training apparatus 2. Thus, the trainee can deepen the understanding of the complicated three-dimensional structures of the nasal cavity and the paranasal sinuses, and can be skilled in the manipulation of the surgical instrument in the narrow surgical space of the nasal cavity and the paranasal sinuses. If the inner and outer surfaces of the nasal cavity lateral wall 42 and the surface of the nasal septum 44 are covered with an elastic membrane mimicking the human mucosa, a training environment more similar to the actual surgical environment can be provided. When the posterior portion 10 and the main portion 40 are formed from the above powder sintering material, and the elastic membrane is formed from silicone rubber, the elastic membrane can be easily peeled from the posterior portion 10 and the main portion 40. Thus, the trainee can deepen the understanding of the bone part, except for the mucosa, by peeling off the elastic membrane. With conventional anatomy using a corpse, there are restrictions from the ethical point of view and, because of the corpse, the mucosa solidifies and turns into a different tissue. Hence, the conventional anatomy provides a training environment far from the actual surgical environment.

In the training apparatus 2, moreover, the main portion 40 to be cut during training is formed separately from the posterior portion 10, and is detachably mounted on the posterior portion 10. The trainee, therefore, can further deepen the understanding of the nasal cavity and the paranasal sinuses even by removing from the posterior portion 10 the main portion 40 to be cut. Once the training has been conducted, the portion requiring replacement is only the main portion 40. Thus, the cost for replacement is cut down as compared with a case where the main portion 40 is formed integrally with the posterior portion 10.

By the way, the distance from the front end of the nostril to the internal carotid artery in the human head is about 18 cm. Hence, an insertion part of the surgical instrument to be inserted from the nostrils is formed to have a length corresponding to the above length in the human head, and is also formed to be thin enough to be insertible from a patient' s nostrils into the nasal cavity (normally, an endoscope has an outer diameter of the order of 2.8 to 4 mm, while other surgical instruments have an outer diameter of the order of 1 to 2 mm) . In endoscopic endonasal skull base surgery using such an elongated surgical instrument, precision work is required for preventing complications such as damage to the internal carotid artery. The requirement for precision work also applies to other surgeries, but a particularly high precision is required of this surgery. From this point of view, it is very important to prevent the trembling of the operator's hand during surgery. In the actual surgery, the operator brings the surgical instrument into contact with the patient's nostril wall, or places his or her fourth finger and fifth finger on the patient's face, thereby preventing the trembling of the hand. In this regard, in the training apparatus 2, the anterior portion 8 is formed from an elastomer having flexibility and elasticity similar to those of the human skin. Thus, the trainee can prevent the trembling of the hand by bringing the surgical instrument inserted from the nostrils 16a into contact with the walls of the nostrils 16a, or placing the fourth and fifth fingers on the front surface of the anterior portion 8, as in the actual surgery.

### Explanations of Letters or Numerals

2: Training apparatus for endoscopic endonasal skull base surgery
4: Human head model
6: liquid circulation means
8: Anterior portion
10: Posterior portion
12: Base block
16: Nose part
16a: Nostril
30: Nasal cavity
40: Main portion
42: Nasal cavity lateral wall
44: Nasal septum
46: Nasal bone
66: Sphenoidal sinus posterior wall
66a: Turkish saddle
66b: Anterior clinoid process
66c: Posterior clinoid process
66d: Clivus
72: Internal carotid artery
72a: Paraclivus part
72b: Cavernous sinus part
102: Storage tank
104: Supply flow path
106: Return flow path
108: Circulation pump

## Claims

1. A training apparatus for endoscopic endonasal skull base surgery, composed of a human head model and liquid circulation means, wherein
the human head model comprises
an anterior portion including a nose part in which nostrils are formed, and
a main portion including at least part of a nasal septum, at least part of a nasal cavity lateral wall, at least part of a sphenoidal sinus posterior wall, and at least part of an internal carotid artery; and
the liquid circulation means comprises
a storage tank for storing a nontransparent colored liquid,
a supply flow path disposed between the storage tank and the at least part of the internal carotid artery,
a return flow path disposed between the at least part of the internal carotid artery and the storage tank, and
a circulation pump for circulating the liquid within the storage tank through the supply flow path, the at least part of the internal carotid artery, and the return flow path.

2. The training apparatus for endoscopic endonasal skull base surgery according to claim 1, wherein
the human head model is provided with a posterior portion including a nasal bone, and
the main portion is formed separately from the anterior portion and the posterior portion, and is mounted detachably on the posterior portion.

3. The training apparatus for endoscopic endonasal skull base surgery according to claim 2, wherein
the anterior portion is formed separately from the posterior portion and the main portion, and is mounted detachably on the posterior portion mounted with the main portion.

4. The training apparatus for endoscopic endonasal skull base surgery according to claim 2 or 3, wherein
the human head model is provided with a base block for detachably accommodating the posterior portion mounted with the main portion.

5. The training apparatus for endoscopic endonasal skull base surgery according to any one of claims 1 to 4, wherein
the main portion is formed based on three-dimensional image data generated from tomographic information on a human head.

6. The training apparatus for endoscopic endonasal skull base surgery according to any one of claims 1 to 5, wherein
the main portion is formed from a powder sintering material.

7. The training apparatus for endoscopic endonasal skull base surgery according to any one of claims 1 to 6, wherein
the anterior portion is formed from an elastomer.
